# EUROPÄISCHE PATENTSCHRIFT

(11) **EP 4 209 335 B1**
(45) Veröffentlichungstag und Bekanntmachung des Hinweises auf die Patenterteilung: **04.12.2024**
(21) Anmeldenummer: 23151112.2
(22) Anmeldetag: 11.01.2023
(51) Int. Cl.: B29D 29/10, B29C 67/00, B29C 33/30, B29C 43/10, B29C 43/36, B29C 33/48

(54) **VORRICHTUNG UND VERFAHREN ZUR HERSTELLUNG WENIGSTENS EINES ANTRIEBSRIEMENS**
DEVICE AND METHOD FOR PRODUCING AT LEAST ONE DRIVE BELT
DISPOSITIF ET PROCÉDÉ DE FABRICATION D'AU MOINS UNE COURROIE D'ENTRAÎNEMENT

(30) Priorität: 11.01.2022 DE 102022100504
(43) Veröffentlichungstag der Anmeldung: 12.07.2023
(73) Patentinhaber: Arntz Beteiligungs GmbH & Co. KG, 37671 Höxter (DE)
(72) Erfinder: Pahl, Martin, 37691 Boffzen (DE); Micus, Christian, 34434 Borgentreich (DE); Swierkot, Wojciech, 37671 Höxter (DE); Döring, Michael, 37671 Höxter (DE); Michel, Frank, 01768 Glashütte (DE)
(74) Vertreter: Günther, Constantin

(56) Entgegenhaltungen:
- EP-A1- 0 442 176
- DE-A1- 102015 221 168
- DE-A1- 2 517 430
- GB-A- 2 088 277
- GB-A- 556 811
- US-A- 3 659 976
- US-A- 4 984 976
- US-A1- 2018 370 079

## Beschreibung

Die Erfindung betrifft eine Vorrichtung zur Herstellung wenigstens eines Antriebsriemens, aufweisend einen rohrförmigen Formgebungskörper mit einem ersten inneren Hohlraum, der sich in Längsrichtung des Formgebungskörpers über die gesamte oder überwiegende Länge des Formgebungskörpers erstreckt und umfangsseitig von einer Wandung des Formgebungskörpers umgeben ist, wobei die zum ersten inneren Hohlraum gewandte Innenseite der Wandung des Formgebungskörpers eine Formgebungsfläche zur Anlage und Formgebung des zu erzeugenden Antriebsriemens beim Herstellungsprozess hat. Die Erfindung betrifft außerdem ein Verfahren zur Herstellung wenigstens eines solchen Antriebsriemens mittels einer derartigen Vorrichtung.

Soweit hier bezüglich der Vorrichtung und des Verfahrens von der Herstellung eines Antriebsriemens bzw. wenigstens eines Antriebsriemens die Rede ist, schließt dies selbstverständlich die gleichzeitige Herstellung einer Vielzahl von Antriebsriemen mittels ein und derselben Vorrichtung sowie innerhalb eines Herstellungsprozesses mit ein. Insbesondere ermöglicht es die erfindungsgemäße Vorrichtung sowie das erfindungsgemäße Verfahren, dass eine gleichzeitige Herstellung einer Vielzahl von Antriebsriemen mit einem entsprechend lang gestalteten Formgebungskörper ermöglicht wird.

Ein solcher Antriebsriemen ist beispielsweise aus der EP 3 822 399 A1 bekannt. Derartige Antriebsriemen kommen in diversen Anwendungen zum Einsatz, um mechanische Arbeit durch kinematische Koppelung von Drehbewegungen zweier oder mehrerer rotierender Maschinenelemente zwischen diesen zu übertragen. Zumeist wird der Antriebsriemen dabei über Riemenscheiben geführt, die durch den Antriebsriemen in dem genannten Sinne gekoppelt werden. Der Antriebsriemen umläuft die Riemenscheiben dabei auf ihren Mantelflächen und überträgt dort auf die Riemenscheiben tangential wirkende Antriebskräfte und Abtriebskräfte, die aufgrund des radialen Abstands der Mantelfläche von der Rotationsachse zu einem auf die Riemenscheibe wirkenden Drehmoment führen. Solche Antriebsriemen sind in verschiedenen Varianten im Einsatz, z.B. in Form von Keilriemen und -Keilrippenriemen. Keilrippenriemen sind dabei Keilriemen mit Rippen auf der zur Riemenscheibe gewandten Seite des Keilriemens.

Keilrippenriemen in kleinen Profilen erlauben Scheibendurchmesser unter 50 mm und werden deshalb in großen Stückzahlen für den Materialfluss in der Logistik eingesetzt, z.B. für die Weitergabe der Antriebsleistung eines Motors von Rolle zu Rolle auf viele Förderrollen. Entsprechend werden kurze Keilrippenriemen mit Längen unter 400 mm, z.T. auch unter 250 mm benötigt.

Zur wirtschaftlichen Fertigung werden Wickel mit einigen hundert Rippen "gestürzt" konfektioniert und vulkanisiert, abschließend in 2- oder 3-Ripper geschnitten und zurück in Normallage gedreht. Zur Konfektion werden auf eine Stahltrommel erst der Rücken, dann der Cord und zuletzt die Kernlage aufgebracht. Zur Vulkanisation sind verschiedene Verfahren bekannt.

Speziell für kurze Riemen wird eine strukturierte Gummi-Hose genutzt: Diese trägt innen das Rippennegativ und überträgt es per Außendruck in den Rohwickel. Temperatur und Formevakuierung unterstützen erst das Prägen, dann die Vulkanisation. Nach Abkühlung und Druckentfernung hebt sich die Gummi-Hose vom Fertigwickel ab, welcher so auch bei kleinen Längen (250 - 400 mm) einfach entformbar ist.

Für größere Längen ist deshalb das Airbag-Verfahren mit präzise ausgeformtem Keilrippenprofil üblich. Statt auf der Konfektionstrommel zu bleiben, wird der Rohwickel - ggf. als Niere - in eine Außen-Stahlform gesteckt, die innen wieder das Rippennegativ trägt. Es folgt ganz innen eine glatte Gummi-Hose, die dann unter Innendruck den Rohwickel in die Stahlform und damit in das Rippennegativ drückt. Wiederum unterstützen Temperatur und Formenevakuierung Prägen und Vulkanisation. Die meist elastischen Corde machen die Dehnung ohne Probleme auch für Längen bis herab zu 100 mm mit. Nach Abkühlen und Druckentfernen lässt sich zwar die glatte Hose einfach herausziehen, aber der Wickel ist von der Stahlform "abzuschälen", in eine Niere zu schlagen und so axial herauszuziehen. Da man bei Riemenlängen unter 400 mm nicht mehr mit dem Arm in die Wickel mit ihrem Innendurchmesser unter 125 mm hereinkommt, können die Wickel nicht mehr traditionell 600 mm, sondern nur noch z.B. 200 mm hoch sein - soweit halt die Finger reichen.

Da die Wärme traditionell durch Dampf eingebracht und dazu die Stahlform als ein doppelwandiges Druckgefäß auszuführen ist, erfordert das Airbag-Verfahren neben dem - für die kleinen Wickelhöhen - hohen Personalaufwand auch noch einen hohen Investitionsaufwand für je ein Druckgefäß pro Riemenlänge.

Aus der GB 556 811 A ist ein Verfahren und eine Vorrichtung für das Formgießen von Gummi und ähnlichen Materialien bekannt. Aus der GB 2 088 277 A ist eine Vorrichtung zur Herstellung von Fischgrätenmuster-Riemen bekannt. Aus der DE 10 2015 221 168 A1 ist ein Verfahren und eine Fertigungsvorrichtung zur Herstellung eines Doppelzahnriemens bekannt. Aus der DE 25 17 430 A1 ist eine Form für die Herstellung von Doppelzahnriemen bekannt. Aus der US 3,659,976 A ist eine Vorrichtung für das Gießen und das Vulkanisieren ringförmiger Gummiartikel bekannt. Aus der US 4,984,976 A ist eine Form für die Herstellung ringförmiger Polymerartikel bekannt.

Der Erfindung liegt die Aufgabe zugrunde, eine verbesserte Vorrichtung und ein Verfahren zur Herstellung wenigstens eines Antriebsriemens anzugeben, bei dem die erwähnten Nachteile vermieden werden.

Diese Aufgabe wird mit einer Vorrichtung gemäß Anspruch 1 gelöst. Dies beinhaltet in einer ersten Variante der Erfindung, dass der Formgebungskörper in Längsrichtung in wenigstens zwei Einzelteile geteilt ist, die jeweilige Sektoren des Formgebungskörpers bilden. Die Sektoren können sich über die gesamte Länge des Formgebungskörpers oder einen Teil dieser Länge erstrecken. Der Formgebungskörper kann z.B. eine im Wesentlichen hohlzylindrische Form haben, wobei an der Außenseite die Form auch abweichend von der Zylinderform gestaltet sein kann, beispielsweise mit einer oder mehreren Abflachungen. Der Begriff "Sektor" ist dabei im mathematischen Sinne zu verstehen.

Vorteilhafter Weise kann mittels der erfindungsgemäßen Vorrichtung ein Entformen des hergestellten Antriebsriemens auf besonders einfache und schonende Weise erfolgen, indem nach Durchführung der einzelnen Herstellschritte die Sektoren des Formgebungskörpers wieder voneinander getrennt werden, insbesondere indem die Sektoren in radialer Richtung voneinander fort bewegt werden. Vorteilhafter Weise eignet sich die erfindungsgemäße Vorrichtung zur Durchführung bereits erprobter und bewährter Herstellungsschritte, insbesondere für die Durchführung der bekannten Airbag-Vulkanisation, ohne dass die bei bekannten Vorrichtungen auftretenden Nachteile vorhanden sind, wie z.B. der hohe Aufwand für das Entformen und die Gefahr von Beschädigungen beim Entformen. Die erfindungsgemäße Vorrichtung eignet sich für alle üblichen Längen von Antriebsriemen, z.B. für Längen im Bereich von 180 bis 700 mm, wobei die Formen im Prinzip mit nur einer, oder höchstens mit vier verschiedenen Heiz- und Kühleinrichtungen temperiert werden können. Hierdurch werden Investitionskosten und Rüstzeit minimiert. Zudem kann eine sehr gleichmäßige Temperaturverteilung über den Umfang und die Länge des Formgebungskörpers erreicht werden, insbesondere mit Temperaturdifferenzen von weniger als 10°C.

Gemäß einer vorteilhaften Ausgestaltung der Erfindung ist vorgesehen, dass die Vorrichtung eine Arretiervorrichtung hat, durch die die Sektoren zumindest in dem zum Formgebungskörper zusammengesetzten Zustand gegenüber einer Bewegung in axialer Richtung arretiert sind. Hierdurch werden die Sektoren des Formgebungskörpers in definierter Weise zueinander fixiert, sodass bei der Durchführung des Herstellungsprozesses des Antriebsriemens keine unerwünschten Verschiebungen zwischen den Sektoren auftreten können. Dabei sind die Sektoren durch die Arretiervorrichtung zumindest in axialer Richtung arretiert. Zusätzlich können die Sektoren durch dieselbe Arretiervorrichtung oder eine weitere Arretiervorrichtung auch in radialer Richtung arretiert sein. Die Arretiervorrichtung kann z.B. durch Stifte und/oder Passfedern und entsprechende Vertiefungen am jeweils anderen Teil der zusammenzufügenden Sektoren des Formgebungskörpers realisiert sein. Die Vorrichtung kann auch beispielsweise einen Deckel und einen Boden haben, durch die der Formgebungskörper an den axialen Endseiten abgedeckt ist. In diesem Fall kann die Arretiervorrichtung beispielsweise einen Anschlag für die einzelnen Sektoren des Formgebungskörpers am Deckel und/oder am Boden aufweisen.

Gemäß einer weiteren Variante der Erfindung, die auch vorteilhaft mit der erstgenannten Variante kombiniert werden kann, ist vorgesehen, dass die Vorrichtung ein Außenrohr hat, das als rohrförmiger Körper mit einem zweiten inneren Hohlraum ausgebildet ist, der zur Aufnahme des rohrförmigen Formgebungskörpers eingerichtet ist, z. B. der zum Formgebungskörper zusammengesetzten Sektoren oder eines nicht in Sektoren geteilten Formgebungskörpers. Alternativ kann die Vorrichtung ein sonstiges außerhalb des rohrförmigen Formgebungskörpers angeordnetes Außenteil haben, wobei das Außenteil mit dem Formgebungskörper zwei radial ineinandergreifende Bauteile der Vorrichtung bilden.

Das Außenrohr kann z.B. als hohlzylindrisches Rohr ausgebildet sein. Mit dem Außenrohr wird es möglich, die zu dem Formgebungskörper zusammengesetzten Sektoren in radialer Richtung auch bei großen Innendrücken, wie sie beim Airbag-Verfahren auftreten, sicher zu halten, indem der Formgebungskörper, d.h. dessen miteinander verbundene Sektoren, in das Außenrohr eingeführt werden. In diesem Zustand werden dann die weiteren Herstellungsschritte zur Herstellung des Antriebsriemens durchgeführt. Vor dem Entformen des hergestellten Antriebsriemens wird dann der Formgebungskörper wieder aus dem Außenrohr entfernt. Dabei kann das Außenrohr vorteilhafter Weise als zumindest in Umfangsrichtung einteiliges Rohr ausgebildet sein, sodass es hohe radiale Kräfte aufnehmen kann. In axialer Richtung kann das Außenrohr einteilig oder mehrteilig ausgebildet sein, beispielsweise in Form von mehreren Außenrohr-Abschnitten.

Im Falle eines nicht in Sektoren geteilten Formgebungskörpers wird mit der erläuterten Gestaltung der Vorrichtung, d. h. einem außerhalb des Formgebungskörpers angeordneten Bauteil, nämlich dem Außenrohr oder dem Außenteil, der Vorteil erzielt, dass man die diverse Maß-variable Formgebungskörper einfach gestalten könnte und nur wenige aufwändige Außenrohre oder Außenteile zum Beispiel mit Dampf-Temperierung benötigt.

Gemäß einer vorteilhaften Ausgestaltung der Erfindung ist vorgesehen, dass das Außenrohr oder das Außenteil zur Temperierung des rohrförmigen Formgebungskörpers durch Wärmeübertragung eingerichtet ist. Beispielsweise kann das Außenrohr oder Außenteil durch eine der nachfolgend erläuterten Heizvorrichtungen erwärmt werden und hierdurch der Formgebung Körper wiederum indirekt erwärmt werden.

Gemäß einer vorteilhaften Ausgestaltung der Erfindung ist vorgesehen, dass der Innendurchmesser des zweiten inneren Hohlraums und der Außendurchmesser des Formgebungskörpers bei einer Temperatur unterhalb von 30°C eine Spielpassung ausbilden. Dies hat den Vorteil, dass der Formgebungskörper mit seinen zusammengesetzten Sektoren ohne großen Kraftaufwand in das Außenrohr eingeführt werden kann und nach Abschluss des Herstellvorgangs daraus wieder entfernt werden kann. Hierbei wird übermäßige Reibung zwischen dem Außenrohr und dem Formgebungskörper vermieden und dementsprechend auch ein Verschleiß zwischen diesen Teilen minimiert. Die gleichen Vorteile gelten auch bei einem nicht in Sektoren geteilten Formgebungskörper.

Gemäß einer vorteilhaften Ausgestaltung der Erfindung ist vorgesehen, dass der Innendurchmesser des zweiten inneren Hohlraums und der Außendurchmesser des Formgebungskörpers bei einer Temperatur oberhalb von 80°C eine Presspassung ausbilden. Dies hat den Vorteil, dass die einzelnen Sektoren des Formgebungskörpers in diesem Zustand in dem Außenrohr sicher gehalten werden, auch ohne zusätzliche Fixierelemente. Ein weiterer Vorteil besteht darin, dass ein gleichmäßiger guter Wärmeübergang zwischen dem Außenrohr und dem Formgebungskörper hergestellt ist, was es ermöglicht, die gesamte Vorrichtung mittels einer Heizvorrichtung zu beheizen, die die Heizwärme auf das Außenrohr abgibt, beispielsweise eine außerhalb des Außenrohrs angeordnete Heizvorrichtung. Die Heizwärme wird dann ohne wesentliche Verluste von dem Außenrohr auf den Formgebungskörper übertragen. Die gleichen Vorteile gelten auch bei einem nicht in Sektoren geteilten Formgebungskörper.

Gemäß der Erfindung ist vorgesehen, dass der Formgebungskörper bzw. dessen Sektoren aus einem Material bestehen, das einen höheren thermischen Ausdehnungskoeffizienten hat als das Material des Außenrohrs oder des Außenteils. Hierdurch kann die zuvor erwähnte Presspassung bei höheren Temperaturen zwischen dem Außenrohr und dem Formgebungskörper auf einfache Weise realisiert werden. Beispielsweise kann das Außenrohr oder Außenteil aus einem ferromagnetischen Material bestehen, z.B. aus Stahl. Als Material für den Formgebungskörper eignet sich z.B. Aluminium. Allgemein sind Materialien für den Formgebungskörper besonders geeignet, die eine gute thermische Leitfähigkeit haben, wodurch etwaige Temperaturunterschiede am Formgebungskörper ausgeglichen werden und die Temperaturdifferenzen unterhalb der maximal erwünschten Temperaturdifferenz von 10°C liegen.

Gemäß einer vorteilhaften Ausgestaltung der Erfindung ist vorgesehen, dass die Vorrichtung eine Heizvorrichtung hat, die zur Erwärmung des Außenrohrs oder des Außenteils auf eine zur Durchführung eines Herstellungsprozesses des Antriebsriemens ausreichende Temperatur eingerichtet ist. Auf diese Weise kann der Herstellprozess des Antriebsriemens prozesssicher, energiesparend und zügig durchgeführt werden. Die Erwärmung des Formgebungskörpers erfolgt dann indirekt über die vom Außenrohr oder Außenteil durch Wärmeübertragung darauf übertragene Wärme.

Die Heizvorrichtung kann aufgrund der vorteilhaften Gestaltung des Formgebungskörpers und gegebenenfalls des Außenrohrs z.B. eine Induktionsheizung, eine Konduktionsheizung und/oder eine Heizvorrichtung, bei der ein erwärmtes gasförmiges Medium durch Heizkanäle der Heizvorrichtung geführt wird, ausgebildet sein. Die Heizvorrichtung kann auch eine Kombination der zuvor genannten Varianten sein. Bei einer Induktionsheizung wird die Wärme in der Vorrichtung induktiv erzeugt, z.B. mittels einer Induktionsspule, die um den Formgebungskörper herum oder um das Außenrohr herum angeordnet ist. Bei einer Konduktionsheizung wird die Wärme konduktiv erzeugt, d.h. durch Widerstandserwärmung, z.B. indem ein elektrischer Strom durch den Formgebungskörper und/oder das Außenrohr geleitet wird. Bei einer Erwärmung durch gasförmiges Medium hat zumindest ein Teil der Vorrichtung Gasleitkanäle, durch die das gasförmige Medium hindurchgeleitet wird, z.B. in Form einer Dampfheizung.

Gemäß einer vorteilhaften Ausgestaltung der Erfindung ist vorgesehen, dass die Vorrichtung einen flexiblen und/oder elastischen Druckbalg hat, insbesondere in Form einer Gummihose, der eine glatte oder strukturierte Außenoberfläche zur Aufnahme des Rohmaterials zur Herstellung des Antriebsriemens hat. Ein solcher elastischer Druckbalg, der z.B. ähnlich wie ein Airbag ausgebildet sein kann, wird für den Herstellprozess dann einfach in den Innenraum des Formgebungskörpers eingeführt, wenn dort bereits der Rohwickel eingelegt ist. Durch Druckbeaufschlagung des Druckbalgs presst dieser dann den Rohwickel gegen die Formgebungsfläche des Formgebungskörpers.

Gemäß einer vorteilhaften Ausgestaltung der Erfindung ist vorgesehen, dass der Druckbalg einen Außendurchmesser hat, der bei Atmosphärendruck innerhalb des Druckbalgs zumindest um die Dicke des zwischen dem Formgebungskörper und dem Druckbalg angeordneten Rohmaterials zur Herstellung des Antriebsriemens geringer ist als der Innendurchmesser des ersten inneren Hohlraums. Dies erlaubt ein einfaches und zügiges Einführen des Druckbalgs in den ersten inneren Hohlraum, zumindest solange der Druckbalg noch nicht mit einem größeren Überdruck beaufschlagt ist. Dabei hat das Rohmaterial zur Herstellung des Antriebsriemens genug Platz in dem Zwischenraum zwischen Druckbalg und dem Formgebungskörper und behindert somit nicht das Einführen des Druckbalgs.

Gemäß einer vorteilhaften Ausgestaltung der Erfindung ist vorgesehen, dass die Vorrichtung zur Herstellung wenigstens eines Antriebsriemens mit einer Rippen-Struktur eingerichtet ist, insbesondere zur Herstellung wenigstens eines Keilrippenriemens, wobei die Formgebungsfläche des Formgebungskörpers eine Oberflächenstrukturierung hat, die als Negativform der Rippen des zu erzeugenden Antriebsriemens ausgebildet ist, d.h. als Rippennegativ. Hierdurch wird insbesondere eine besonders einfache Entformbarkeit eines strukturierten Antriebsriemens, d.h. eines Antriebsriemens mit Rippen-Struktur, durch die erfindungsgemäße Vorrichtung ermöglicht, d.h. durch die voneinander teilbaren Sektoren des Formgebungskörpers.

Die eingangs genannte Aufgabe wird außerdem gelöst durch ein Verfahren zur Herstellung eines Antriebsriemens mittels einer Vorrichtung der zuvor erläuterten Art mit folgenden Schritten:
A) Bereitstellen eines Rohwickels aus einem Rohmaterial des Antriebsriemens,
B) Einlegen des Rohwickels in die noch nicht miteinander verbundenen Sektoren des Formgebungskörpers oder im Falle eines nicht in Sektoren unterteilten Formgebungskörpers in den Formgebungskörper,
C) im Falle eines in Sektoren unterteilten Formgebungskörpers, Verbinden der Sektoren des Formgebungskörpers miteinander, sodass sich ein geschlossener innerer Hohlraum ergibt, in dem der Rohwickel angeordnet ist,
D) Einführen eines elastischen Druckbalgs in den Innenraum des Rohwickels,
E) Erwärmen des Formgebungskörpers auf eine erste Temperatur,
F) Druckbeaufschlagen eines Innenraums des Druckbalgs zur Durchführung eines Anpressvorgangs des Rohwickels an die Formgebungsfläche des ersten inneren Hohlraums,
G) Entformen des hergestellten Antriebsriemens aus dem Formgebungskörper, wobei im Falle eines in Sektoren unterteilten Formgebungskörpers die Sektoren des Formgebungskörpers voneinander getrennt werden.

Auch hierdurch können die zuvor erläuterten Vorteile realisiert werden. Durch das zunächst durchgeführte Erwärmen des Formgebungskörpers auf eine erste Temperatur und die Druckbeaufschlagung des Druckbalgs wird dem Rohwickel eine gewünschte Grundform aufgeprägt. Die erste Temperatur kann dementsprechend die Prägetemperatur eines solchen Herstellvorgangs sein.

In einer vorteilhaften Ausgestaltung der Erfindung können die zuvor angegebenen Schritte A) bis G) in der angegebenen Reihenfolge ausgeführt werden. Dabei ist es möglich, dass der Schritt F) vor oder nach dem Schritt E) oder zeitlich überlappend mit dem Schritt E) durchgeführt werden kann. Durch die zeitgleiche oder zumindest zeitlich überlappende Druckbeaufschlagung während der Erwärmung kommt es zum Formschluss, welcher Vorteile hinsichtlich der Temperaturverteilung bringt.

Im Falle der Herstellung eines Antriebsriemens mit einer Rippen-Struktur kann der Schritt F) wie folgt durchgeführt werden:
F) Druckbeaufschlagen eines Innenraums des Druckbalgs zur Durchführung eines Prägevorgangs des Rohwickels an der Oberflächenstrukturierung des ersten inneren Hohlraums.

Auf diese Weise werden beim Prägevorgang die gewünschten Rippen des Antriebsriemens erzeugt.

Gemäß einer vorteilhaften Ausgestaltung der Erfindung ist vorgesehen, dass nach dem Schritt F) und vor dem Schritt G) ein weiteres Erwärmen des Formgebungskörpers auf eine oberhalb der ersten Temperatur liegende Vulkanisationstemperatur erfolgt und bei erreichter Vulkanisationstemperatur eine Vulkanisolationsphase durchgeführt wird. Hierdurch wird die für den Antriebsriemen verwendete Kautschukmischung in ein Vulkanisat gewandelt.

Gemäß einer vorteilhaften Ausgestaltung der Erfindung ist vorgesehen, dass nach dem Schritt C) und vor dem Schritt D) der Formgebungskörper in ein Außenrohr der Vorrichtung eingeführt wird und vor dem Entformen des hergestellten Antriebsriemens im Schritt G) der Formgebungskörper aus dem Außenrohr der Vorrichtung entfernt wird. Dies hat den Vorteil, dass der mehrteilige Formgebungskörper während des Herstellungsprozesses durch das Außenrohr gehalten und stabilisiert wird. Zudem kann die Erwärmung der Vorrichtung indirekt durch Erwärmung des Außenrohrs durchgeführt werden. Dies hat wiederum den Vorteil, dass die Vorrichtung keine im Formgebungskörper integrierte Heizeinrichtung benötigt.

Gemäß einer vorteilhaften Ausgestaltung der Erfindung ist vorgesehen, dass die Erwärmung des Formgebungskörpers mittels einer Induktionsheizung, einer Konduktionsheizung und/oder durch ein erwärmtes gasförmiges Medium, insbesondere mittels einer Dampfheizung, durchgeführt wird. Im Fall einer Erwärmung durch gasförmiges Medium kann z.B. das Außenrohr als doppelwandiges Druckgefäß ausgebildet sein, durch das das erwähnte gasförmige Medium geleitet wird, zum Beispiel im Falle einer Dampfheizung der Dampf.

Gemäß einer vorteilhaften Ausgestaltung der Erfindung ist vorgesehen, dass im Schritt G) im Falle eines in Sektoren unterteilten Formgebungskörpers beim Entformen des hergestellten Antriebsriemens aus dem Formgebungskörper die Sektoren des Formgebungskörpers in radialer Richtung voneinander fort bewegt werden. Dies ermöglicht ein zuverlässiges Entformen des Antriebsriemens ohne Gefahr von dessen Beschädigung.

Die Vorrichtung kann zusätzlich eine Kühlvorrichtung haben, mit der die zuvor durch die Heizvorrichtung erwärmten Teile der Vorrichtung schnell wieder abgekühlt werden kann. Die Heizvorrichtung kann zusammen mit der Kühlvorrichtung eine Temperier-Vorrichtung zum Temperieren des Formgebungskörpers und gegebenenfalls von dessen Außenrohr bilden.

Zusammengefasst können mit der Erfindung folgende Vorteile erzielt werden.

Überwinden der eingangs im Hinblick auf den Stand der Technik genannten Nachteile von
- Längeneinschränkungen,
- geringer Rippenqualität,
- geringer Wickelhöhe und damit hoher Personalkosten sowie
- das Vermeiden von Dampfgefäßen und damit hohen artikelspezifischen Investitionskosten.
   Vorteilhaft ist auch
- das Verwenden industrieüblicher induktiver Heizgeräte statt Dampf,
- die damit verringerte Infrastruktur und der geringe Flächenbedarf,
- welcher eine weltweit verteilte Fertigung entsprechend der Kundenlokalitäten ermöglicht und den Transport von vielen Kubikmetern Luft aufgrund der geringen Packungsdichte der Kleinstkeilrippenriemen vermeidet
- aufgrund der relativ geringen Formkosten die wirtschaftliche Fertigung von Sonderartikel wie z.B. Kurvenriemen

Die Erfindung wird nachfolgend anhand von Ausführungsbeispielen unter Verwendung von Zeichnungen näher erläutert.

Dabei zeigen
- Figur 1: eine Vorrichtung zur Herstellung eines Antriebsriemens in Querschnittsdarstellung,
- Figur 2: die Vorrichtung gemäß Figur 1 im Längsschnitt.

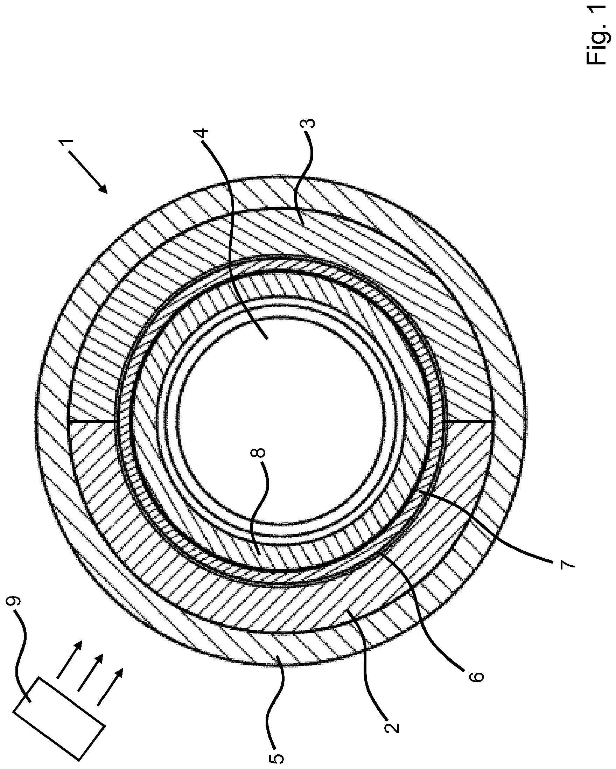

Die in Figur 1 dargestellte Vorrichtung 1 hat einen mehrteiligen Formgebungskörper 2, 3, der in diesem Fall in zwei Einzelteile geteilt ist, die einen Sektor 2 und einen Sektor 3 des Formgebungskörpers 2, 3 bilden. Man erkennt, dass der Formgebungskörper 2, 3 eine im Wesentlichen hohlzylindrische Form hat. Der Formgebungskörper 2, 3 hat an der Innenseite eine Formgebungsfläche 6 zur Anlage des zu erzeugenden Antriebsriemens 7. Innerhalb des Antriebsriemens 7 bzw. vor dem Herstellvorgang innerhalb des Rohwickels befindet sich ein Druckbalg 8, der mit einem erhöhten Innendruck beaufschlagt werden kann, um den Rohwickel bzw. den Antriebsriemen 7 gegen die Formgebungsfläche 6 zu pressen. Dabei kann der Zwischenraum zwischen der Formgebungsfläche 6 und der Außenseite des Druckbalgs 8 zusätzlich mittels einer Evakuierungsvorrichtung evakuiert werden.

Die Sektoren 2, 3 sind in dem dargestellten zusammengesetzten Zustand mittels einer Arretiervorrichtung, z.B. mittels eines Deckels 4, gegenüber einer Bewegung in axialer Richtung arretiert, d.h. sie können sich in axialer Richtung nicht gegeneinander verschieben. Der Formgebungskörper 2, 3 ist innerhalb eines Außenrohrs 5 angeordnet. Die Vorrichtung hat außerdem eine Heizvorrichtung 9, die dazu eingerichtet ist, Heizwärme an das Außenrohr 5 abzugeben. Das Außenrohr 5 überträgt die Wärme auf den Formgebungskörper 2, 3, der eine hohe thermische Leitfähigkeit hat, sodass sich die Wärme gleichmäßig über den Formgebungskörper 2, 3 verteilt.

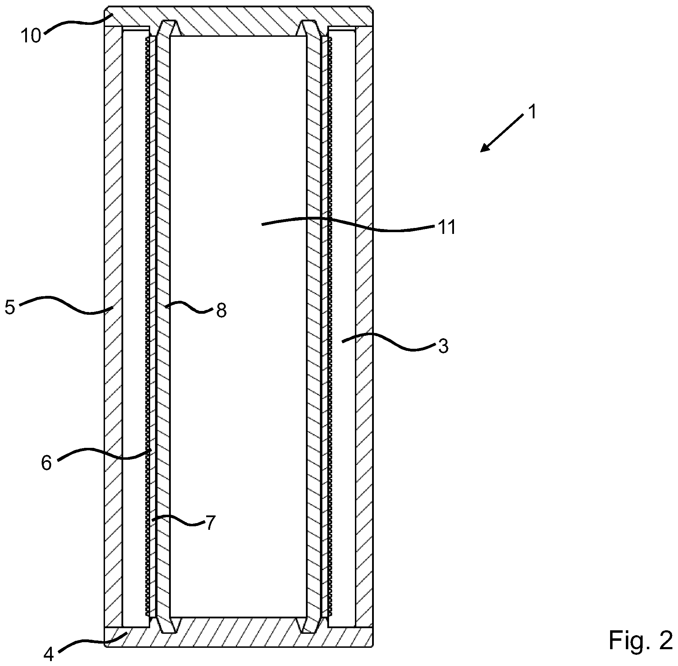

Wie die Figur 2 verdeutlicht, hat die Vorrichtung 1 an jeder Stirnseite einen Deckel 4, 10, durch den der Formgebungskörper 2, 3 und das Außenrohr 5 in Längsrichtung hin abgeschlossen sind. Zumindest einer der Deckel 4, 10 kann dabei als Arretiervorrichtung zum Fixieren der Sektoren des Formgebungskörpers 2, 3 in axialer Richtung dienen. Für die Durchführung des Herstellungsvorgangs des Antriebsriemens 7 wird der Innenraum 11 des Druckbalgs 8 mit einem Überdruck gegenüber dem Atmosphärendruck beaufschlagt.

Das Außenrohr 5 kann als ferromagnetisches Außenrohr ausgebildet sein, zum Beispiel aus Stahl. Das Außenrohr 5 hat einen Außendurchmesser ADA, einen Innendurchmesser IDA und eine Höhe (bzw. Länge) HA.

Der Formgebungskörper 2, 3 bildet ein geteiltes Innenrohr der Vorrichtung aus, z.B. mit festem Außendurchmesser ADI, einem Innendurchmesser IDI und fester Höhe (bzw. Länge) Hl. Die Teilungsebene des Formgebungskörpers 2, 3 kann durch die Rohrmittelachse verlaufen. Die Sektoren 2, 3 können aus einem Material mit einem höheren thermischen Ausdehnungskoeffizienten als das Außenrohr 5 und einer guten thermischen Leitfähigkeit bestehen, was außerdem Temperaturunterschiede in der Form ausgleicht. Das Material ist vorzugsweise Aluminium. Die Rohrinnenseite hat die Negativform der herzustellenden Rippen, der mittlere Innendurchmesser IDI wird also variabel an die herzustellende Riemenlänge angepasst.

IDA und ADI können so aufeinander abgestimmt sein, dass bei Raumtemperatur (z.B. 30 °C) eine Spielpassung und spätestens ab 80°C eine Presspassung vorliegt. Damit lassen sich die Innenrohrhälften bei Raumtemperatur in das Außenrohr schieben, ab 80°C, d.h. der niedrigsten Fließtemperatur der Wickelrohlinge, ist der Spalt zwischen den Innenrohrhälften geschlossen.

HI und HA können so aufeinander abgestimmt sein, dass sie bei Raumtemperatur höher als der Rohwickel sind und bei der höchsten Vulkanisationstemperatur HI < HA ist. Durch die zylindrische Form von Außen- und Innenrohr rutscht das Innenrohr wegen des höheren Wärmeausdehnungskoeffizienten bei Erwärmung und Abkühlung partiell am Außenrohr 5.

Eine Verbindung der Sektoren kann z.B. durch Stifte oder Passfedern und / oder ein Anschlag der Sektoren am Deckel oder Boden erfolgen, die axiales Verschieben der Sektoren zueinander verhindern.

Der Druckbalg 8 kann als eine glatte Gummihose mit Außendurchmesser ADH so ausgebildet sein, dass bei Atmosphärendruck innerhalb des Druckbalgs 8 sich mit ADH < Rohwickelinnendurchmesser sich der Rohwickel leicht ein- und ausführen lässt und bei einem industrieüblichen Innendruck die Gummihose den Rohwickel in das Rippennegativ des Innenrohrs drücken kann. Die Hosenhöhe HH kann mit HH > HA so bemessen sein, dass die Gummihose den Innendruck via Deckel und Boden abdichtet. Eine Dichtung zum Außenrohr 5, z.B. mit O-Ringen, kann vorteilhaft nahe dem Außendurchmesser angeordnet sein, damit eventuelle Kühlwasserrückstände leicht und vollständig abgesaugt werden können.

Deckel und Boden können mit Dichtungen und Dichtflächen zum Außenrohr 5 und zum Druckbalg 8 sowie zu Versorgungsanschlüssen für Hoseninnendruck und für die Form-Evakuierung ausgebildet sein. Sind Deckel und Boden an den Kontaktstellen gestuft, sind die o.g. Längen entsprechend zu adaptieren.

Vorteilhaft ist zudem eine Behandlung oder Beschichtung der äußeren und/oder inneren Oberfläche des Innenrohrs oder Teilen davon, sodass diese Teile gegen Verschleiß oder Beschädigung widerstandsfähiger sind und eine geringe Haftung zum Wickel und/oder zum Außenrohr aufweisen. Ersteres wird z.B. durch Anodisieren erreicht, zweiteres z.B. durch Auftrag eines - auch bei Stahlformen üblichen - Trennmittels. Ist das Trennmittel auf Wasserbasis, ist es vorteilhaft wenn das Wasser vor dem Kontakt mit dem Wickelrohling z.B. durch Erwärmen verdampft wird, um Dampfschäden am Wickel zu vermeiden.

Der wärmeeinbringende Teil der Temperier-Vorrichtung, d. h. die Heizvorrichtung 9, kann bestehen aus
- einer Induktionsheizvorrichtung, z.B. einer handelsüblichen für das Fügen von Wälzlagern, mit einer Induktionsspule mit Innendurchmesser IDS, sodass ein Luftspalt L=½·(IDS-ADA) entsteht zum leichten Ein- und Ausführen der Form, die ggf. noch um einen Kühlmantel verstärkt ist. Die Windungen dieser Spule variieren in ihrer Steigung so, dass beim Aufheizen der unterschiedliche Wärmebedarf für Mittel-, Deckel- und Bodenbereich mit ihren unterschiedlichen Wärmekapazitäten und Konvektionsbedingungen (z.B. Kamineffekt) so bedient wird, dass die Temperaturverteilung gleichmäßig genug ist. Dazu geht die Induktionsspule vorteilhaft in den Randbereichen über die Formhöhe hinaus und die Spulensteigung ist hier geringer als in der Mitte.
- Und/oder der Ausführung des Außenrohrs als doppelwandiges Druckgefäß wieder traditionell zur Beheizung mit Dampf, wobei durch die Vielfachverwendung des Außenrohrs für viele Riemenlängen die Investitionskosten im Rahmen gehalten werden.
- Zusätzlich kann bei beiden Heizvarianten eine variable Wärmeisolierung von Deckel und/oder Boden und/oder Außenrohr vorhanden sein, die die Wärmeverluste der Form und damit den Energiebedarf verringern und Veränderungen des Zonen-Wärmebedarfs adaptieren. Diese entstehen, weil beim Halten des Temperaturplateaus nur noch die Wärmeverluste ausgeglichen und nicht wie beim Erwärmen auch noch die Wärmekapazitäten zu bedienen sind. Unterschiedlicher Wärmezonenbedarf entsteht auch, wenn für eine andere Riemenlänge Innenformhälften mit veränderten Wanddicke genutzt werden und damit eine andere Wärmekapazität im Mittelbereich gleichen Wärmekapazitäten in den Randzonen gegenüber steht.

Der kühlende Teil der Temperier-Vorrichtung kann bestehen
- bei induktiver Heizung
   o aus einem Wasserbad, in das der gesamte Formgebungskörper 2, 3 mit dem Außenrohr 5 getaucht wird. Das Wasserbad hat den Vorteil, dass die induktive Heizung bereits mit der nächsten Form beschickt werden kann. oder
   o oder aus einem Kühlmantel aus induktiv nicht aufheizbarem Material wie z.B. ein glasgefüllter Kunststoff. Der Kühlmantel befindet sich im Luftspalt L zwischen Spule und Außenrohr. Er bildet einen Hohlraum zum Außenrohr, der zum Kühlen mit Kühlwasser geflutet wird. Vorteilhaft sind Zufluss / Zuflüsse unten und Abfluss / Abflüsse oben, damit sich der Hohlraum komplett mit Kühlwasser füllt und der anfangs entstehende Wasserdampf ungehindert durch die Abflüsse entweichen kann. Durch den ungehinderten Abfluss brauchen Außenrohr und Kühlmantel nicht als Druckgefäß ausgeführt werden. Der Kühlmantel hat den Vorteil, dass nicht aufwändig Wassertropfen von der Form abgesaugt werden müssen.
- bei Dampfheizung traditionell aus einem doppelwandigen Druckgefäß-Außenrohr und Weichen im Dampfzu- und -abgang, die den Dampffluss stoppen und Kühlwasser in den Hohlraum des doppelwandigen Außenrohrs leiten.

Das Verfahren zur Herstellung von Antriebsriemen mittels einer solchen Vorrichtung kann wie folgt ablaufen:
1. Trennmittel auf die Formgebungsfläche 6 des Formgebungskörpers 2, 3 und auf die Außenseite des Druckbalgs 8 auftragen
2. Konfektion Rohwickel in gestürztem Aufbau, aber auf eine zerlegbare Konfektionstrommel (z.B. Keilverbund), und Entnahme Rohwickel von Konfektionstrommel
3. Einlegen des Rohwickels in die geöffneten Sektoren des Formgebungskörpers 2, 3, dann Zusammenfügen der Sektoren mit axialer Verschiebesicherung
4. Einführen des Formgebungskörpers 2, 3 und des Rohwickels in das Außenrohr 5 bis zu einem Anschlag am Boden
5. Einführen des Druckbalgs 8 ganz innen
6. Verschließen auf diese Weise gebildeten Form mit Deckel inkl. Innendruck- und Formevakuieranschluss
7. Ggf. Einführen der Form in die Induktionsspule
8. Aufheizen bis Prägetemperatur, Evakuieren der Form
9. Innendruckaufbau und Prägephase
10. Aufheizen bis Vulkanisationstemperatur und Vulkanisationsphase
11. Abschalten Vakuum, Kühlen bis nahe Raumtemperatur, Abschalten Innendruck
12. Ggf. Ausführen der Form aus Induktionsspule und Absaugen der Wassertropfen
13. Abnehmen des Deckels, Entnahme des Druckbalgs 8 und des Formgebungskörpers 2, 3 inkl. Wickel bzw. Antriebsriemen
14. Öffnen des Formgebungskörpers 2, 3 und "Herausschälen" des Wickels bzw. der Antriebsriemen von der Formgebungsfläche 6
15. Wiederholen mit neuem Wickel ab Schritt 2. oder, bei verbrauchtem Trennmittel, ab Schritt 1.

Eine Verfahrensalternative mit Anschlag/Befestigung der Sektoren des Formgebungskörpers 2, 3 am Deckel kann wie folgt ablaufen und ist besonders für die Kühlung mit Kühlmantel / doppelwandigem Außenrohr, wo ggf. Außenrohr, Boden und Kühleinrichtung in der Induktionsspule verbleiben, geeignet:
1. Trennmittel auf die Formgebungsfläche 6 des Formgebungskörpers 2, 3 und auf die Außenseite des Druckbalgs 8 auftragen (wie oben)
2. Konfektion Rohwickel in gestürztem Aufbau, aber auf eine zerlegbare Konfektionstrommel (z.B. Keilverbund), und Entnahme Rohwickel von Konfektionstrommel (wie oben)
3. Einlegen des Rohwickels in die geöffneten Sektoren des Formgebungskörpers 2, 3 wie oben,
   Einführen des Druckbalgs 8 ganz innen,
   Schließen der Sektoren des Formgebungskörpers 2, 3 und Anschlag / Befestigung am Deckel
4. Einführen von Formgebungskörper 2, 3 / Rohwickel / Deckel in Außenrohr 5 / Boden,
5. Verschließen der so gebildeten Form inkl. Innendruck- und Formevakuieranschluss
6. Aufheizen bis Prägetemperatur, Evakuieren der Form (wie oben)
7. Innendruckaufbau und Prägephase (wie oben)
8. Aufheizen bis Vulkanisationstemperatur und Vulkanisationsphase (wie oben)
9. Abschalten Vakuum, Kühlen bis nahe Raumtemperatur, Abschalten Innendruck (wie oben)
10. Abnehmen des Verbundes Deckel / Formgebungskörper 2, 3 / Wickel / Druckbalg 8, Abnehmen des Deckels und des Druckbalgs 8
11. Öffnen des Formgebungskörpers 2, 3 und "Herausschälen" des Wickels bzw. der Antriebsriemen von der Formgebungsfläche 6 (wie oben)
12. Wiederholen mit neuem Wickel ab Schritt 2. oder, bei verbrauchtem Trennmittel, ab Schritt 1. (wie oben)

## Patentansprüche

1. Vorrichtung (1) zur Herstellung wenigstens eines Antriebsriemens (7), aufweisend einen rohrförmigen Formgebungskörper mit einem ersten inneren Hohlraum, der sich in Längsrichtung des Formgebungskörpers über die gesamte oder überwiegende Länge des Formgebungskörpers erstreckt und umfangsseitig von einer Wandung des Formgebungskörpers umgeben ist, wobei die zum ersten inneren Hohlraum gewandte Innenseite der Wandung des Formgebungskörpers eine Formgebungsfläche (6) zur Anlage und Formgebung des zu erzeugenden Antriebsriemens (7) beim Herstellungsprozess hat, mit einem oder beiden der folgenden Merkmale i), ii):
i) der Formgebungskörper ist in Längsrichtung in wenigstens zwei Einzelteile geteilt, die jeweilige Sektoren (2, 3) des Formgebungskörpers bilden,
ii) die Vorrichtung (1) hat
- ein Außenrohr (5), das als rohrförmiger Körper mit einem zweiten inneren Hohlraum ausgebildet ist, der zur Aufnahme des rohrförmigen Formgebungskörpers eingerichtet ist,
oder
- ein sonstiges außerhalb des rohrförmigen Formgebungskörpers angeordnetes Außenteil, wobei das Außenteil mit dem Formgebungskörper zwei radial ineinandergreifende Bauteile der Vorrichtung bilden,
**dadurch gekennzeichnet, dass** der Formgebungskörper bzw. dessen Sektoren (2, 3) aus einem Material bestehen, das einen höheren thermischen Ausdehnungskoeffizienten hat als das Material des Außenrohrs (5) oder des Außenteils.

2. Vorrichtung nach Anspruch 1, **dadurch gekennzeichnet, dass** die Vorrichtung (1) eine Arretiervorrichtung hat, durch die die Sektoren (2, 3) zumindest in dem zum Formgebungskörper zusammengesetzten Zustand gegenüber einer Bewegung in axialer Richtung arretiert sind.

3. Vorrichtung nach einem der vorhergehenden Ansprüche, **dadurch gekennzeichnet, dass** das Außenrohr (5) oder das Außenteil zur Temperierung des rohrförmigen Formgebungskörpers durch Wärmeübertragung eingerichtet ist.

4. Vorrichtung nach Anspruch 3, **dadurch gekennzeichnet, dass** der Innendurchmesser (IDI) des zweiten inneren Hohlraums und der Außendurchmesser des Formgebungskörpers bei einer Temperatur unterhalb von 30 °C eine Spielpassung ausbilden.

5. Vorrichtung nach Anspruch 3 oder 4, **dadurch gekennzeichnet, dass** der Innendurchmesser (IDI) des zweiten inneren Hohlraums und der Außendurchmesser des Formgebungskörpers bei einer Temperatur oberhalb von 80 °C eine Presspassung ausbilden.

6. Vorrichtung nach einem der vorhergehenden Ansprüche, **dadurch gekennzeichnet, dass** die Vorrichtung (1) eine Heizvorrichtung (9) hat, die zur Erwärmung des Außenrohrs (5) oder des Außenteils auf eine zur Durchführung eines Herstellungsprozesses des Antriebsriemens (7) ausreichende Temperatur eingerichtet ist.

7. Vorrichtung nach einem der vorhergehenden Ansprüche, **dadurch gekennzeichnet, dass** die Vorrichtung (1) einen flexiblen und/oder elastischen Druckbalg (8) hat, insbesondere in Form einer Gummihose, der eine glatte oder strukturierte Außenoberfläche zur Aufnahme des Rohmaterials zur Herstellung des Antriebsriemens (7) hat.

8. Vorrichtung nach einem der vorhergehenden Ansprüche, **dadurch gekennzeichnet, dass** der Druckbalg (8) einen Außendurchmesser hat, der bei Atmosphärendruck innerhalb des Druckbalgs (8) zumindest um die Dicke des zwischen dem Formgebungskörper und dem Druckbalg (8) angeordneten Rohmaterials zur Herstellung des Antriebsriemens (7) geringer ist als der Innendurchmesser (IDI) des ersten inneren Hohlraums.

9. Vorrichtung nach einem der vorhergehenden Ansprüche, **dadurch gekennzeichnet, dass** die Vorrichtung (1) zur Herstellung wenigstens eines Antriebsriemens (7) mit einer Rippen-Struktur eingerichtet ist, insbesondere zur Herstellung wenigstens eines Keilrippenriemens, wobei die Formgebungsfläche (6) des Formgebungskörpers eine Oberflächenstrukturierung hat, die als Negativform der Rippen des zu erzeugenden Antriebsriemens (7) ausgebildet ist.

10. Verfahren zur Herstellung wenigstens eines Antriebsriemens (7) mittels einer Vorrichtung nach einem der vorhergehenden Ansprüche mit folgenden Schritten:
A) Bereitstellen eines Rohwickels aus einem Rohmaterial des Antriebsriemens (7),
B) Einlegen des Rohwickels in die noch nicht miteinander verbundenen Sektoren (2, 3) des Formgebungskörpers oder im Falle eines nicht in Sektoren unterteilten Formgebungskörpers in den Formgebungskörper,
C) im Falle eines in Sektoren unterteilten Formgebungskörpers, Verbinden der Sektoren (2, 3) des Formgebungskörpers miteinander, sodass sich ein geschlossener innerer Hohlraum ergibt, in dem der Rohwickel angeordnet ist,
D) Einführen eines elastischen Druckbalgs (8) in den Innenraum (11) des Rohwickels,
E) Erwärmen des Formgebungskörpers auf eine erste Temperatur,
F) Druckbeaufschlagen eines Innenraums (11) des Druckbalgs (8) zur Durchführung eines Anpressvorgangs des Rohwickels an die Formgebungsfläche (6) des ersten inneren Hohlraums, wobei der Schritt f) vor, nach oder zeitlich überlappend mit dem Schritt E) durchgeführt werden kann,
G) Entformen des hergestellten Antriebsriemens (7) aus dem Formgebungskörper, wobei im Falle eines in Sektoren unterteilten Formgebungskörpers die Sektoren (2, 3) des Formgebungskörpers voneinander getrennt werden.

11. Verfahren nach Anspruch 10, **dadurch gekennzeichnet, dass** nach dem Schritt F) und vor dem Schritt G) ein weiteres Erwärmen des Formgebungskörpers auf eine oberhalb der ersten Temperatur liegende Vulkanisationstemperatur (HI) erfolgt und bei erreichter Vulkanisationstemperatur (HI) eine Vulkanisolationsphase durchgeführt wird.

12. Verfahren nach einem der Ansprüche 10 bis 11, **dadurch gekennzeichnet, dass** nach dem Schritt C) und vor dem Schritt D) der Formgebungskörper in ein Außenrohr (5) der Vorrichtung (1) eingeführt wird und vor dem Entformen des hergestellten Antriebsriemens (7) im Schritt G) der Formgebungskörper aus dem Außenrohr (5) der Vorrichtung (1) entfernt wird.

13. Verfahren nach Anspruch 12, **dadurch gekennzeichnet, dass** die Erwärmung des Formgebungskörpers indirekt durch Erwärmung des Außenrohrs (5) durchgeführt wird.

14. Verfahren nach einem der Ansprüche 10 bis 13, **dadurch gekennzeichnet, dass** die Erwärmung des Formgebungskörpers mittels einer Induktionsheizung, einer Konduktionsheizung und/oder durch ein erwärmtes gasförmiges Medium, insbesondere mittels einer Dampfheizung, durchgeführt wird.

15. Verfahren nach einem der Ansprüche 10 bis 14, **dadurch gekennzeichnet, dass** im Schritt G) im Falle eines in Sektoren unterteilten Formgebungskörpers beim Entformen des hergestellten Antriebsriemens (7) aus dem Formgebungskörper die Sektoren (2, 3) des Formgebungskörpers in radialer Richtung voneinander fort bewegt werden.

## Claims

1. Device (1) for producing at least one drive belt (7), having a tubular shaping body with a first inner cavity which extends in the longitudinal direction of the shaping body over the entire or predominant length of the shaping body and is surrounded on the circumferential side by a wall of the shaping body, wherein the inner side of the wall of the shaping body facing the first inner cavity has a shaping surface (6) for contacting and shaping the drive belt (7) to be produced during the manufacturing process, with one or both of the following features i), ii):
i) the shaping body is divided longitudinally into at least two individual parts, which form respective sectors (2, 3) of the shaping body,
ii) the device (1) has
- an outer tube (5) which is designed as a tubular body with a second inner cavity which is arranged to receive the tubular shaping body,
or
- another outer part arranged outside the tubular shaping body, the outer part and the shaping body forming two radially interlocking components of the device,
**characterized in that** the shaping body or its sectors (2, 3) consist of a material which has a higher coefficient of thermal expansion than the material of the outer tube (5) or the outer part.

2. Device according to claim 1, **characterized in that** the device (1) has a locking device by means of which the sectors (2, 3) are locked against movement in the axial direction at least in the state assembled to form the shaping body.

3. Device according to one of the preceding claims, **characterized in that** the outer tube (5) or the outer part is set up for tempering the tubular shaping body by heat transfer.

4. Device according to claim 3, **characterized in that** the inner diameter (IDI) of the second inner cavity and the outer diameter of the shaping body form a clearance fit at a temperature below 30 °C.

5. Device according to claim 3 or 4, **characterized in that** the inner diameter (IDI) of the second inner cavity and the outer diameter of the shaping body form an interference fit at a temperature above 80 °C.

6. Device according to any one of the preceding claims, **characterized in that** the device (1) has a heating device (9) which is arranged to heat the outer tube (5) or the outer part to a temperature sufficient for carrying out a manufacturing process of the drive belt (7).

7. Device according to one of the preceding claims, **characterized in that** the device (1) has a flexible and/or elastic pressure bellows (8), in particular in the form of a rubber trouser, which has a smooth or structured outer surface for receiving the raw material for producing the drive belt (7).

8. Device according to one of the preceding claims, **characterized in that** the pressure bellows (8) has an outer diameter which, at atmospheric pressure inside the pressure bellows (8), is smaller than the inner diameter (IDI) of the first inner cavity by at least the thickness of the raw material arranged between the shaping body and the pressure bellows (8) for producing the drive belt (7).

9. Device according to one of the preceding claims, **characterized in that** the device (1) is set up for producing at least one drive belt (7) with a ribbed structure, in particular for producing at least one ribbed V-belt, the shaping surface (6) of the shaping body having a surface structuring which is designed as a negative shape of the ribs of the drive belt (7) to be produced.

10. Method for manufacturing at least one drive belt (7) by means of an apparatus according to one of the preceding claims, comprising the following steps:
A) Preparation of a raw winding from a raw material of the drive belt (7),
B) Inserting the raw winding into the sectors (2, 3) of the shaping body that are not yet connected to each other or, in the case of a shaping body that is not divided into sectors, into the shaping body,
C) in the case of a shaping body divided into sectors, connecting the sectors (2, 3) of the shaping body to each other so that a closed inner cavity is formed in which the raw winding is arranged,
D) Insertion of an elastic pressure bellows (8) into the interior (11) of the raw winding,
E) Heating the shaping body to a first temperature,
F) pressurizing an inner space (11) of the pressure bellows (8) for carrying out a pressing operation of the raw winding against the shaping surface (6) of the first inner cavity, wherein step f) can be carried out before, after or overlapping in time with step E),
G) demolding the manufactured drive belt (7) from the shaping body, whereby in the case of a shaping body divided into sectors, the sectors (2, 3) of the shaping body are separated from one another.

11. Method according to claim 10, **characterized in that** after step F) and before step G), the shaping body is heated further to a vulcanization temperature (HI) above the first temperature and, when the vulcanization temperature (HI) is reached, a vulcanization phase is carried out.

12. Method according to one of claims 10 to 11, **characterized in that** after step C) and before step D) the shaping body is introduced into an outer tube (5) of the device (1) and before demolding of the manufactured drive belt (7) in step G) the shaping body is removed from the outer tube (5) of the device (1).

13. Method according to claim 12, **characterized in that** the heating of the shaping body is carried out indirectly by heating the outer tube (5).

14. Method according to one of claims 10 to 13, **characterized in that** the heating of the shaping body is carried out by means of an induction heater, a conduction heater and/or by a heated gaseous medium, in particular by means of a steam heater.

15. Method according to one of claims 10 to 14, **characterized in that** in step G), in the case of a shaping body divided into sectors, the sectors (2, 3) of the shaping body are moved away from one another in the radial direction during demoulding of the manufactured drive belt (7) from the shaping body.

## Revendications

1. Dispositif (1) de fabrication d'au moins une courroie de transmission (7), comprenant un corps de formage tubulaire ayant une première cavité intérieure qui s'étend dans la direction longitudinale du corps de formage sur toute la longueur ou sur la majorité de la longueur du corps de formage et qui est entourée sur sa périphérie par une paroi du corps de formage, la face intérieure de la paroi du corps de formage, tournée vers la première cavité intérieure, ayant une surface de formage (6) pour l'application et le formage de la courroie de transmission (7) à produire lors du processus de fabrication, présentant un des éléments i), ii) suivants ou les deux :
i) le corps de formage est divisé dans la direction longitudinale en au moins deux parties individuelles qui forment des secteurs respectifs (2, 3) du corps de formage,
ii) le dispositif (1) comporte
- un tube extérieur (5) qui est conçu comme un corps tubulaire ayant une deuxième cavité intérieure conçue pour recevoir le corps de formage tubulaire,
ou
- une autre partie extérieure disposée à l'extérieur du corps de formage tubulaire, la partie extérieure formant avec le corps de formage deux composants du dispositif qui s'engagent radialement l'un dans l'autre,
**caractérisé en ce que** le corps de formage ou ses secteurs (2, 3) sont constitués en un matériau ayant un coefficient de dilatation thermique supérieur à celui du matériau du tube extérieur (5) ou de la partie extérieure.

2. Dispositif selon la revendication 1,
**caractérisé en ce que** le dispositif (1) comprend un dispositif d'arrêt par lequel les secteurs (2, 3) sont arrêtés par rapport à un mouvement dans la direction axiale, au moins dans l'état assemblé en le corps de formage.

3. Dispositif selon l'une des revendications précédentes,
**caractérisé en ce que** le tube extérieur (5) ou la partie extérieure est conçu(e) pour tempérer le corps de formage tubulaire par transfert de chaleur.

4. Dispositif selon la revendication 3,
**caractérisé en ce que** le diamètre intérieur (IDI) de la deuxième cavité intérieure et le diamètre extérieur du corps de formage forment un ajustement avec jeu à une température inférieure à 30 °C.

5. Dispositif selon la revendication 3 ou 4,
**caractérisé en ce que** le diamètre intérieur (IDI) de la deuxième cavité intérieure et le diamètre extérieur du corps de formage forment un ajustement serré à une température supérieure à 80 °C.

6. Dispositif selon l'une des revendications précédentes,
**caractérisé en ce que** le dispositif (1) comporte un dispositif de chauffage (9) conçu pour chauffer le tube extérieur (5) ou la partie extérieure à une température suffisante pour réaliser un processus de fabrication de la courroie de transmission (7).

7. Dispositif selon l'une des revendications précédentes,
**caractérisé en ce que** le dispositif (1) comporte un soufflet de compression (8) flexible et/ou élastique, en particulier sous la forme d'une culotte en caoutchouc, qui présente une surface extérieure lisse ou structurée destinée à recevoir la matière brute pour la fabrication de la courroie de transmission (7).

8. Dispositif selon l'une des revendications précédentes,
**caractérisé en ce que** le soufflet de compression (8) présente un diamètre extérieur qui, à la pression atmosphérique à l'intérieur du soufflet de compression (8), est inférieur au diamètre intérieur (IDI) de la première cavité intérieure au moins de l'épaisseur de la matière brute destinée à la fabrication de la courroie de transmission (7) et disposée entre le corps de formage et le soufflet de compression (8).

9. Dispositif selon l'une des revendications précédentes,
**caractérisé en ce que** le dispositif (1) est conçu pour la fabrication d'au moins une courroie de transmission (7) présentant une structure nervurée, en particulier pour la fabrication d'au moins une courroie à nervures trapézoïdales, la surface de formage (6) du corps de formage présentant une structuration de surface qui est conçue comme une forme négative des nervures de la courroie de transmission (7) à fabriquer.

10. Procédé de fabrication d'au moins une courroie de transmission (7) au moyen d'un dispositif selon l'une des revendications précédentes, comprenant les étapes suivantes consistant à :
A) fournir un enroulement brut à partir d'une matière brute de la courroie de transmission (7),
B) mettre en place l'enroulement brut dans les secteurs (2, 3) non encore reliés entre eux du corps de formage ou, dans le cas d'un corps de formage non divisé en secteurs, dans le corps de formage,
C) dans le cas d'un corps de formage divisé en secteurs, relier les secteurs (2, 3) du corps de formage entre eux, de sorte qu'il en résulte une cavité intérieure fermée dans laquelle est disposé l'enroulement brut,
D) introduire un soufflet de compression élastique (8) dans l'espace intérieur (11) de l'enroulement brut,
E) chauffer le corps de formage à une première température,
F) mettre sous pression un espace intérieur (11) du soufflet de compression (8) pour réaliser une opération de pressage de l'enroulement brut contre la surface de formage (6) de la première cavité intérieure, l'étape f) pouvant être réalisée avant, après ou en chevauchement temporel avec l'étape E),
G) démouler la courroie de transmission (7) fabriquée hors du corps de formage, les secteurs (2, 3) du corps de formage étant séparés l'un de l'autre dans le cas d'un corps de formage divisé en secteurs.

11. Procédé selon la revendication 10,
**caractérisé en ce que**, après l'étape F) et avant l'étape G), un chauffage supplémentaire du corps de formage s'effectue jusqu'à une température de vulcanisation (HI) supérieure à la première température et, lorsque la température de vulcanisation (HI) est atteinte, il se produit une phase de vulcanisation.

12. Procédé selon l'une des revendications 10 à 11,
**caractérisé en ce que**, après l'étape C) et avant l'étape D), le corps de formage est introduit dans un tube extérieur (5) du dispositif (1) et, avant le démoulage de la courroie de transmission (7) fabriquée, à l'étape G), le corps de formage est retiré du tube extérieur (5) du dispositif (1).

13. Procédé selon la revendication 12,
**caractérisé en ce que** le chauffage du corps de formage est réalisé indirectement par chauffage du tube extérieur (5).

14. Procédé selon l'une des revendications 10 à 13,
**caractérisé en ce que** le chauffage du corps de formage est réalisé au moyen d'un chauffage par induction, d'un chauffage par conduction et/ou par un fluide gazeux chauffé, en particulier au moyen d'un chauffage à la vapeur.

15. Procédé selon l'une des revendications 10 à 14,
**caractérisé en ce que**, à l'étape G), dans le cas d'un corps de formage divisé en secteurs, lorsque la courroie de transmission (7) fabriquée est démoulée du corps de formage, les secteurs (2, 3) du corps de formage sont éloignés l'un de l'autre dans la direction radiale.
